# EUROPEAN PATENT SPECIFICATION

(11) **EP 2 770 431 B1**
(45) Date of publication and mention of the grant of the patent: **04.01.2017**
(21) Application number: 13382056.3
(22) Date of filing: 25.02.2013
(51) Int. Cl.: G06F 9/50, H04L 29/08, H04L 12/24, H04L 12/26

(54) **System and method to trigger cross-layer optimizations in a network**
System und Verfahren zur Auslösung von Cross-Layer-Optimierungen in einem Netzwerk
Système et procédé pour déclencher des optimisations de couches croisées dans un réseau

(43) Date of publication of application: 27.08.2014
(73) Proprietor: Telefonica S.A., 28013 Madrid (ES)
(72) Inventor: Lopez Alvarez, Victor, 28013 Madrid (ES); Contreras Murillo, Luis Miguel, 28013 Madrid (ES); Azañón Teruel, Amanda, 28013 Madrid (ES)
(74) Representative: Gonzalez-Alberto Rodriguez, Natalia

(56) References cited:
- US-A1- 2004 064 558
- US-A1- 2012 054 346
- Guilherme Piêgas Koslovski: "Dynamically provisioned virtual infrastructures: specification, allocation and execution", , 4 July 2011 (2011-07-04), 4 July 2011 (2011-07-04), pages 1-167, XP055050339, Retrieved from the Internet: URL:http://perso.ens-lyon.fr/paulo.goncalv es/G-Koslovski/02-KOSLOVSKI-memoire.pdf [retrieved on 2013-01-21]

## Description

### Field of the art

The present invention generally relates to telecommunication based services and more particularly, in a first aspect, to a system to trigger cross-layer optimizations in a network by providing a mechanism to the network allowing the interaction with Data Centers.

The invention concerns also, in a second aspect, to a method to be implemented by the system to trigger cross-layer optimizations from the network.

### Prior State of the Art

Data Center (DC) based services are emerging as an essential component of network capacity demand for service providers and telecom operators. On another hand, cloud computing services, Content Distribution Networks (CDNs), and, generally, the networked applications are impacting on the telecom operator infrastructure.

The computing resources can be provided on-demand depending on the user requests. Such resources can be allocated on distinct servers into a data center, or even spread across distinct data centers connected to the network.

Under this new model, the users access their assigned resources, and the applications and services using them, through a telecom operator network. Additionally, thanks to the possibility of allocating resources in separated data centers, the telecom network becomes the key point to efficiently connect users to services and applications, which now are consumed independently of where either the resource or the user is located. The versatile consumption of resources and the distinct nature of the applications running on it will produce very variable traffic patterns on the connections to the data centers.

The efficient integration of cloud services among distributed Data Centers, including the interconnecting network, becomes then a challenge.

The cloud computing paradigm provides a new model for service delivery where the Information Technology (IT) resources form a pool able to attend multiple service demands by means of a dynamic assignment of resources, like CPU or storage capacity, either physical or virtual (by using some abstraction mechanisms). And the virtualization technology allows a flexible management of IT resources, distributing them as needed within a data center or among distributed data centers. The entity that is capable of managing such IT resources will be called "Data Center Manager" (DCM).

Nowadays the Data Centers are accessed either via best effort Internet (with unpredictable network performances) or through static dedicated transit connections (typically over-dimensioned, and thus not efficiently from a CapEx and OpEx perspective). However, some other network control mechanisms can be found for actual networks. For instance, current circuit creation can be done dynamically via control plane in GMPLS enabled networks. Thanks to the control plane it is possible to configure the transport elements to provide the connectivity between them. Moreover, the IP equipment can be configured using a network management system and to configure both, the IP and the optical layer, an IP Offloading manager as the one employed in [1] can be used for instance ([1] *"*V. López, J.L. Añamuro, C. García, V. Moreno, M. Izal, J.E. López de Vergara, J.P. Fernández-Palacios and J. Aracil: Implementation of Multi-layer techniques using FEDERICA, PASITO and OneLab network infrastructures, in the proceedings of the 17th IEEE International Conference on Networks (ICON), Dec, 2011*").* As there are multiple technologies to establish the path via control or management plane, the entity that configures the network resources will be called "Network Management System" (NMS).

As previously defined Data Center Managers can configure, allocate and modify the logical set-up of the IT resources, while NMSs can provide the connectivity. ACG (Application CSO Gateway) is defined with an API, so it can carry out Data Center Manager functions. NCG also has an API with NMS, so it can configure and modify the connections in the network.

An example to trigger network configurations directly from services or applications is the one described in US 2012/054346 where it is disclosed a *"Method and System for Cross-Stratum Optimization in Application-Transport Networks".* Figure 1 illustrates the different elements used and its interfaces. In that patent, when an end user wants IT and network resources, it would send a request to the ACG, which would compute which are the resources at the IT layer. Based on this information, the ACG would request to the network layer to create a connection between two data centers Data Center 1 and Data Center 2. NCG would receive such request and, based on the network information, it would create the path. Authors in US 2012/054347 *"Cross-Stratum Optimization Protocol"* define the messages in the Application-Networking Communication Interface and Protocol. Thanks to this interface between the layers, invention in US 2012/054346 allows the global optimization of the resources. Furthermore, an algorithm to run such objective is defined in US 2012/106333 *"NetworkAware Global Load Balancing System and Method".*

However, to take advance of all resources in the IT and network layer, it is necessary a Network Element capable of running preventive or reactive operations in the network, i. e. interacting with the Data Centers or even modifying the connections of Data Center services to improve network efficiency, based on the Data Center information. Previous inventions US 2012/054346, US 2012/054347 and US 2012/106333 do not contemplate the situation when the QoS requirements of the connection of a Data Center service cannot be fulfilled, and the network requires connecting two other Data Centers, instead of Data Center 1 and Data Center 2.

On the other hand, in US 2004/064558 A1 a system management (SM) server located at different management domains is provided and used to manage resources across said domains on request from a user. Additionally, in the scientific document "Dynamically provisioned virtual infrastructures: specification, allocation and execution", an HIPerNet framework is proposed for providing and managing dynamic Virtual Infrastructures combining system and network virtualization technologies with bandwidth sharing and advance reservation mechanisms. However, none of these two solutions, SM server and/or HIPerNET framework, neither take advance of the resources in the IT and network layer hence said solutions do not allow modifying the connections of the Data Center to improve network efficiency.

### Summary of the Invention

Current state of the art proposals don't allow the network to trigger cross-layer optimizations based on the information that the network has about the IT and network resources. For that, an object of the invention is to provide a solution which can request application or service layer for a reconfiguration, i.e. responding to events internal to the network. The invention allows requesting the application layer for a new configuration of the Data Center, so application layer QoS requirements can be fulfilled.

To that end the present invention proposes, according to one aspect, a system to trigger cross-layer optimizations from the network, comprising as already known in the art the following elements:
- an Application Cross Stratum Optimization (CSO) Gateway coupleable to an application layer, the application CSO gateway adapted to configure and monitor a plurality of Data Center Elements which store a plurality of computing resources;
- a Network CSO Gateway coupleable to a network layer adapted to configure and monitor a plurality of Network Elements by using information stored in a Network Related Data module using a Network Processes module and to communicate through an interface with said Application CSO Gateway adapted to configure connections between a plurality of Data Centers, each one of said plurality of Data Centers including one of said Data Center Elements.

On contrary of the proposals known in the art, and in a characteristic manner, the proposed system further includes the following elements:
- a Client entity coupleable to a Network Element or to a Data Center Element configured to monitor a segment of the network where said Client entity is located by means of metering a plurality of parameters and the Client entity adapted to produce monitored network information;
- an IT-Aware Network Controller coupleable to said network layer, and configured to interact with said application layer and to run operations in the network including execution of said triggering based on said monitored network information and on information regarding said Data Center Elements; and
- a plurality of interfaces coupling the different elements of the system allowing the interconnection and communication between them.

Thus, the proposed architecture can get information from the network and Data Centers in order to orchestrate the network and Data Centers status and the Data Centers and network configuration.

The IT-Aware Network Controller, is an entity, either centralized or distributed in the network, that is split in sub-modules in order to carry out, for instance, a storage of the topological information of the network, thus letting to make decisions that imply relocation of resources or topologically optimized resources assignments; an execution of optimization algorithms, including not only network but also IT information; operations scheduling, in charge of triggering periodic actions defined following some logic (e.g. periodical optimizations) and management of triggers and configurations; computing resources reservation, in order to guarantee service levels by reserving resources for future use; and quotation thus making possible to provide a ranking between potential computing resources for further decision on the preferred usage for an external or internal function.

According to a preferred embodiment, the sub-modules in which the IT-Aware Network Controller is split are:
- a Core module, which is the central entity of the IT-Aware Network Controller, and is configured to at least store the configuration of the network by requesting it to said network CSO gateway and to store and run an algorithm complying with a plurality of policies. It also can store information in an IT State DB with the information of the Meter modules and send a new configuration to the elements or application CSO gateway. Moreover, it can request for information to the application CSO gateway in case it cannot get from the Client entity;
- a Dispatcher module coupled to the Core module, to an IT information collector and to a Client Controller and configured to send a plurality of commands to said Client entity so they can take actions in their elements (Data Center Elements or Network Elements) based on the Core instructions. As the Core instructions may involve multiple Network Elements and Data Center Elements, the Dispatcher is in charge of orchestrating each step in the Core instruction;
- a Meter module coupled to the Core module, to the IT information collector and to the Client Controller and configured to receive the monitored network information from the Client entity and the information regarding the Data Center Elements and to further send it to the Core module. It pre-processes the information to reduce the amount of information sent to the Core module. Correlation of the information and/or computation of average performance are examples of such pre-processes. The Meter module stores certain information in the status DB to reduce the computation in the Core module;
- a Client Controller configured to at least retrieve the monitored network information from the Client entity and further configured to adapt it to the Meter module. Moreover, it receives the commands information from the dispatcher module and translates it to the client's protocol;
- said IT information collector configured to retrieve the information regarding the plurality of Data Center Elements and further configured to adapt it to the Meter module. Contrary of the Client Controller, this module receives the commands information from the Dispatcher module and translates it to the Data Center Elements;
- an IT state database (DB) configured to store the computing resources of the Data Center Elements and the monitored network information from said Client entity; and
- an IT-aware algorithm module configured to contain a plurality of algorithms complying with said policies.

On another hand, the Client entity or Client(s) as sometimes referred in the present description is an entity distributed in the network, either in a stand-alone approach or integrated as a functionality of an element having at least the following functions:
- It performs a monitoring of the network by metering different variables, which could affect network or service performance, as traffic load, quality parameters, content subscriptions, etc.
- It stores aggregate information, which is retrieved from the elements and summarized and stored in an aggregate fashion to reduce the overhead. Such information is further processed to derive optimization actions based on the policies. This information could be received directly from one or more Network Elements, or directly from the IT-Aware Network Controller.
- It applies the policies, in case the circumstances are encountered, for instance, in case some threshold is reached, or some issue is notified.

In yet another preferred embodiment, the Client entity includes the following modules:
- an Admin module configured to provide an interface with the IT-Aware Network Controller thus allowing the performance of management functions such as the configuration of the Client entity or the algorithms loading;
- a Core module configured to handle the interaction among the IT-Aware Network Controller and the rest of the Client entity modules;
- an Algorithms and Policies module configured to apply a plurality of algorithms complying with policies;
- a database module configured to store the information of the network regarding said monitoring hence serving as trigger for client's actions.

In a second aspect the invention proposes a method to trigger cross-layer optimizations in a network which comprises:
- configuring and monitoring, by an Application Cross Stratum Optimization (CSO) Gateway, a plurality of Data Center Elements storing a plurality of computing resources, said configuring and monitoring performed upon receiving a request, from a user, for said plurality of computing resources; and
- configuring and monitoring, by a Network CSO Gateway, a plurality of Network Elements and receiving requests from said Application CSO Gateway for configuring connections between a plurality of Data Centers.

In a characteristic manner, the method of the second aspect further involves performing the following steps:
- monitoring, by a Client entity, a segment of a network where said Client entity is located by means of metering a plurality of parameters, the Client entity producing monitored network information;
- running, by an IT-Aware Network Controller, operations in the network including execution of said triggering at least based on said monitored network information and on information regarding said plurality of Data Center Elements, allowing a further interaction with an application layer where said Application CSO Gateway is arranged, said further interaction enabling at least a request for a new connection configuration between said plurality of Data Centers.

The IT-Aware Network Controller, as above explained, will take decisions on the Network Elements to dynamically assign (and scale up and down) the network capacity for paths connecting to Data Centers spread in the network thus guaranteeing the expected quality of service. Examples of these decisions could be for instance, the increase of bandwidth for a connection between a network node (e.g. BRAS) for a path to the Data Center, or to set up a new connection towards a less loaded Data Center in the network. These capabilities will then support procedures to allow elastic on-demand connectivity as a way to configure the network based on the changing demands.

Furthermore, it will send instructions to the application layer in order to implement optimization actions from the network point of view. Some of the examples of these instructions could be for instance the request of moving a virtual machine or a streaming content from one Data Center to another. These capabilities will then accommodate the Data Center traffic demand to the network reality (e.g., constrained by bandwidth scarcity, or bad quality performance) as a way to convey such demand in a cost-effective and performance guaranteed way. These instructions are preferably triggered by means of executing an algorithm complying with a plurality of policies

### Brief Description of the Drawings

The previous and other advantages and features will be more fully understood from the following detailed description of embodiments, with reference to the attached, which must be considered in an illustrative and non-limiting manner, in which:

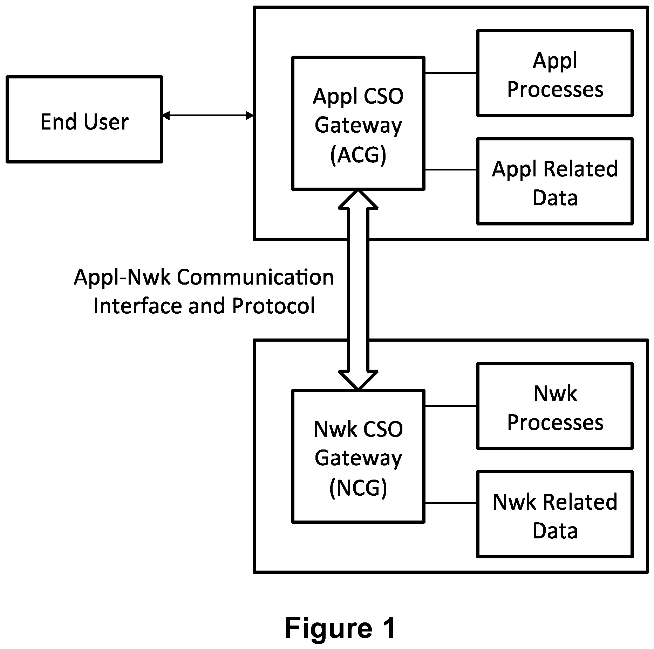

Figure 1 is an illustration of the architecture defined in the state of the art proposal US 2012/054346.
Figure 2 is an illustration of the architecture proposed by the invention, according to an aspect.
Figure 3 is an illustration of the architecture of the Client entity used in the invention.
Figure 4 is a flow chart describing the start-up process use case, according to an embodiment of the invention.
Figure 5 is a flow chart showing the Policy match and element configuration use case, according to an embodiment of the invention.

### Detailed Description of Several Embodiments

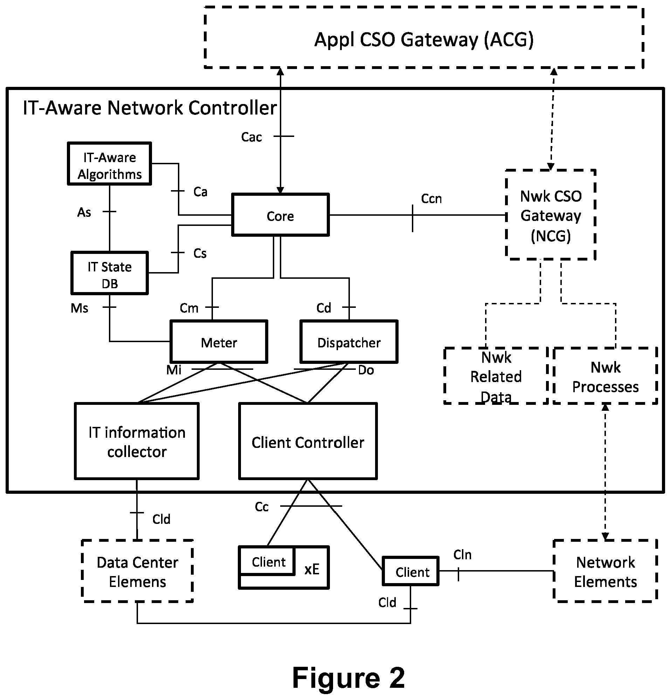

Figure 2 shows the proposed architecture of the invention, according to an aspect. There are some components in the state of the art that are out of the scope of this patent application (those with dash lines in the figure), but which are related to the architecture. These components are:

The Network Element (NE) is an entity which enables the data transmission. The Network Element can be (but not limited to) routers, switches, OXCs, ROADMs, etc.

The Data Center Element (DCE) is an entity with IT resources or computing resources in the Data Center. The Data Center Element can be (but not limited to) servers, storage resources, VMs, etc.

The Network CSO Gateway (NCG) is an entity which can configure and monitor the NEs thanks to the information store in the module Network Related Data using the module Network Processes. This Network Processes module can configure the NEs using management or control plane solutions. All these elements are defined in US 2012/054346. Moreover, this entity can receive requests from the Application CSO Gateway to configure connections or to give abstract information about connections in the network.

Finally, the Application CSO Gateway (ACG) is an entity, which configures and monitors the Data Center Element using Application Related Data and Application Processes modules. There are proprietary and standard solutions to do such configuration. This entity also can request to the NCG to configure connections or it can ask for abstract information about connections in the network to the NCG.

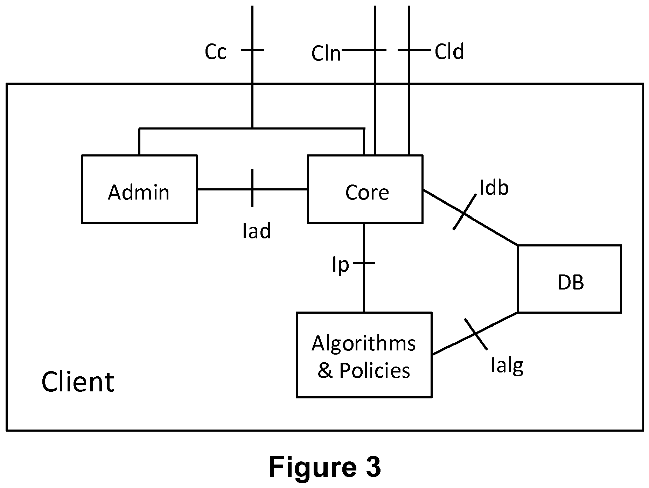

The proposed architecture is mainly based on two main components: the IT-Aware Network Controller and the Client entity (from now on named as Client(s) according to Figures 2 and 3).

As explained in a previous section the IT-Aware Network Controller is split in, according to a preferred embodiment, sub-modules to carry out its functionalities or functions. These sub-modules are: a Core module which is the central entity of the IT-Aware Network Controller; a dispatcher module that sends the commands to the clients so they can take actions in their elements (Data Center Elements or Network Elements) based on the Core instructions; a Meter module that receives the information from the clients and IT information for the Data Center Elements and it sends it to the Core module; an IT State DB that stores information about IT resources from the clients, Application CSO Gateway and the network information from the clients; an IT-Aware Algorithms that contains the algorithms used to apply the policies from the IT-Aware Network Controller point of view; a Client Controller that retrieves the information from the Client(s) and adapts this information to the Meter; and an IT information collector that retrieves the information from the Data Center Elements and adapts this information to the Meter sub-module.

Figure 2 also shows the different interfaces used for connecting the IT-Aware Network Controller sub-modules between them and with the rest of the related elements. These interfaces can be categorized as external or internal interfaces in regard to the IT-Aware Network Controller.

The IT-Aware Network Controller external interfaces are:
- Cc interface (Client Controller to Client(s)): this interface defines the interaction between the Client Controller and the Client(s) modules. The following messages are exchanged through the interface: Administration, Policies definition, and Configuration messages.
- Cld interface (IT information collector to Data Center Element): this interface allows the Clients(s) to retrieve information from the Data Center Element and to send information to them. This interface can re-use functionalities from standard interfaces to configure Data Centers, but it can require new messages for further functionalities. This interface is the same interface between Client(s) and Data Center Element.
- Cac interface (ACG to Core): this interface allows the Core to submit and retrieve information with the ACG. The following messages are defined for the interface: GetTopology, GetStatus and Configuration messages.

On another hand, the IT-Aware Network Controller internal interfaces are:
- Ccn interface (Core to NCG): this interface allows the message exchange between the IT-Aware Network Controller and the NCG. The following transactions are defined: GetTopology, GetStatus and Configuration messages.
- Ca interface (Core to IT-Aware Algorithms): This interface is used by the Core module to communicate with the algorithms module. The algorithm is decided based on the policies defined in the configuration and the trigger to run the action (lack of network or IT resources, request from the administrative interface, failure, etc.). The following messages are exchanged through the interface: Policies definition messages, Run algorithm, Configuration messages.
- Cs interface (Core to IT State DB): This interface communicates the Core module and the IT state DB module. It is used to feed the state DB with information obtained at the Core module or to retrieve information from the DB. The following messages are defined for the interface: GetTopology, GetStatus, UpdateStatus and UpdateTopology messages.
- Cd interface (Core to Dispatcher): The Core module sends the commands to the dispatcher module through this interface. The following messages are exchanged through the interface: Policies definition and Configuration messages.
- Cm interface (Core to Meter): the Core module receives the information from the Meter module via this interface. These are the transactions in the interface: Policies definition and Configuration messages.
- Ms interface (Meter to IT State DB): This interface sends information of the external elements to the IT State DB. The following messages are exchanged through the interface: Policies definition and Configuration messages.
- Mi interface (Meter to IT information collector): This interface receives the information from the Client(s), NMS and Data Center controllers. The following messages are defined for the interface: Policies definition and Configuration messages.

Similarly, the Client(s) functions are divided among a number of sub-modules as it is shown in Figure 3. As explained in previous section, these sub-modules are: an Admin module providing an interface with the IT-Aware Network Controller for management functions such as configuration of the client, algorithms loading, etc.; a Core Module containing the intelligence of the client component; an Algorithms and Policies module keeping the algorithms to be applied conforming policies defined for certain network events; and a DB module storing the relevant performance information which serves as trigger for Client's actions.

Figure 3 also shows the different interfaces used for connecting the Client(s) sub-modules between them and with the rest of the related elements. These interfaces can be categorized as external or internal interfaces, in regard to the Client(s).

The Client(s) external interfaces are:
- Cc interface (Client Controller to Client(s)): this interface defines the interaction between the Client Controller and the Client(s) modules. The following message types are exchanged through the interface: Administration, Policies definition, and Configuration messages.
- Cln interface (Client(s) to Network Elements or Edge Network Elements): this interface allows the Client(s) to retrieve information from the Network Elements and to send information to them. This interface can re-use functionalities from standard interfaces to configure Network Elements, but it can require novel messages for further functionalities.
- Cld interface (Client(s) to Data Center Elements): this interface allows the Client(s) module to retrieve information from the Data Center Elements and to send information to them. This interface can re-use functionalities from standard interfaces to configure datacenters, but it can require new messages for further functionalities. This interface is the same interface between IT information collector and Data Center Elements.

The Client(s) internal interfaces are:
- lad interface (Admin to Core): the following message types are exchanged through the interface: Administration, GetStatus, GetTopology, Policies definition, and Configuration messages.
- Ip interface (Core to Algorithms & Policies): the following message types are exchanged through the interface: Policies definition messages.
- Idb interface (Core to DB): the following message types are exchanged through the interface: GetTopology, GetStatus, UpdateStatus and UpdateTopology messages.
- lalg interface (Algorithms & Policies to DB): the following message types are exchanged through the interface: GetTopology and GetStatus, messages.

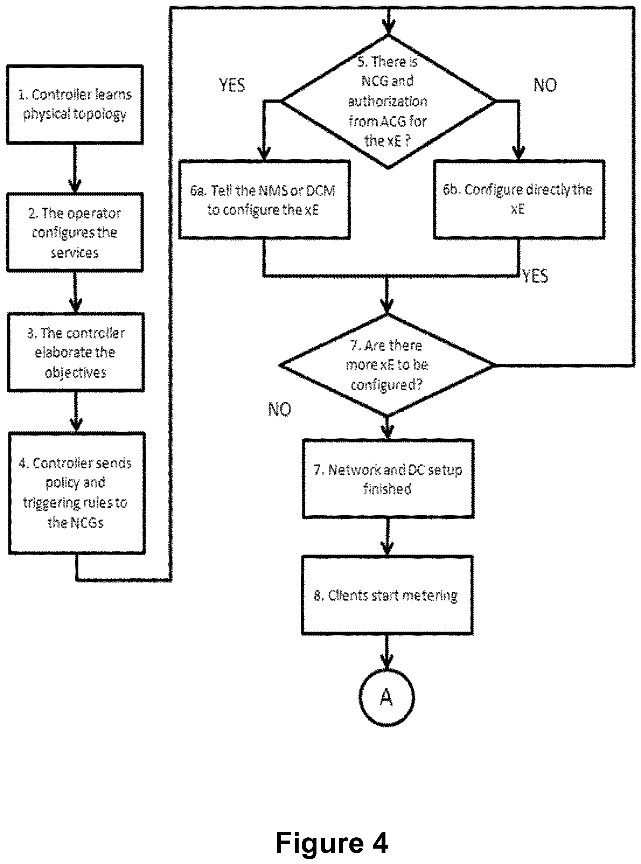

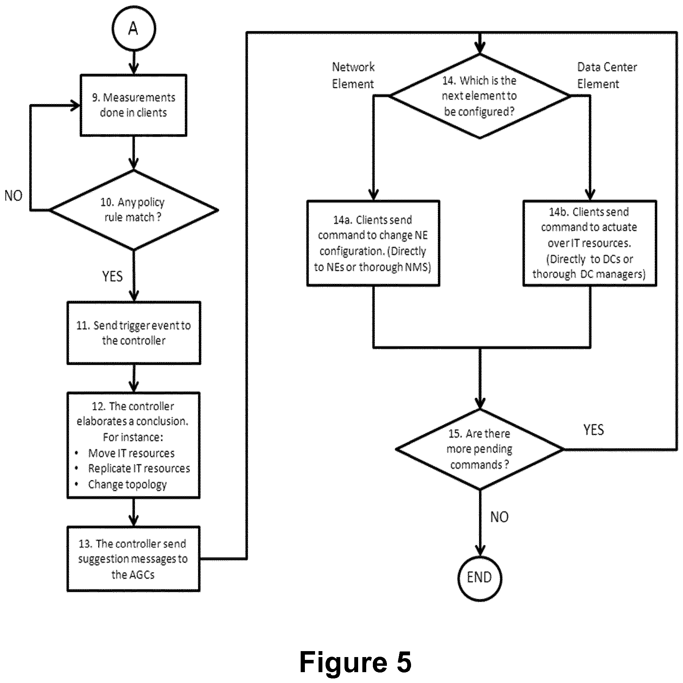

Figures 4 and 5 show a possible exemplary use case embodiment of the present invention where a policy rule is matched and a configuration of the elements is done. The start-up process is showed in Figure 4, and is executed as follows:
1. At start time, the IT-Aware Network Controller learns the physical topology; this can be done through a consultation to the networking related data using an external NGC or from Client(s). Regarding the IT part this can be done using IT information collector or Client(s).
2. The system operator makes relevant configurations like virtual networks, Data Centers and policy rules for first time.
3. The IT-Aware Network Controller elaborates a set of objectives; these objectives are how the network must be configured to do so NGC and Client Controller can be used.
4. To maintain these objectives, the IT-Aware Network Controller has personalized triggering conditions and policies which are executed using NCGs under control and the Client Controller.
5. The Client(s) configure the xEs under its control. Using an external NCG or directly thorough the Client Controller previous ACG authorization.
6. If there is not a NGC connected to the xE, the Client(s) does this configuration directly.
7. At this point, the network setup configuration is finished.
8. The Client(s) begin to do Metering in the network segment where they are located. If NGC supports this metering process it can also be used.

After the start-up process finishes (point A) it begins the Policy match and element configuration, as is it showed in Figure 5. This process is executed as follows:
9. The measures done by the Client(s) are compared to their policy databases entries.
10. If the measurers match one or more policy rules a trigger event is launched by the Meter module to the Core module.
11. The trigger event is sent to the Core module and suing the Dispatcher client starts to do some preconfigured actuations over its xEs under control. If NGC is able to do such pre-configurations it can be also used.
12. At the same time the Core module, with that trigger event and the data recollection from the IT Information collector, Meters and external NCGs elaborate a conclusion. The conclusion can be, but no limited to:
   - An IT resource must me moved from one Data Center to another (VMs)
   - An IT resource must be replicated, (typically video streams or services)
   - A change of a virtual topology is needed to accommodate some required parameters, like Bandwidth, latency, etc.

   This conclusion is elaborated based on the IT-algorithms and the database information stored in the IT-Aware Network Controller.
13. With the conclusion the Core module elaborate a set of commands to send to the different entities under control (Client(s)) and generates a message for the ACG informing and suggesting an action to accomplish the situation.
14. The Core selects which is the next element to be configured based on the elaborated commands. There are three groups of commands, depending on the element to be configured:
   a) Network Element. Some examples of configuration are:
      - Send commands to Network Element clients to change the bandwidth of certain interfaces.
      - Defines a new data path using an algorithm adequate for the new data path constraints
      - Sends commands to create the above-defined data path in form of control plane commands for transport layer and routing commands for the IP layer.
      - Send commands to destroy the old data path if exists.
   b) Data Center Element:
      - Send commands to Data Centers and Data Center managers under control to actuate over certain IT resources, (move or replicate).
15. If there are pending commands, the procedure returns to 14^{th} step, otherwise the process is finished.

These procedures must be done without notice by the services users.

The foregoing describes embodiments of the present invention and modifications, obvious to those skilled in the art can be made thereto, without departing from the scope of the present invention.

### ACRONYMS

- BRAS: Broadband Remote Access Server
- Ca: Core to Algorithms interface
- Cad: Core to Administrative interface
- CapEx: CAPital Expenditures
- Cc: Controller to Client interface
- Cd: Core to Dispatcher interface
- Cd: Controller to DC manager interface
- Cdcm: Client to DC Manager interface
- CDN: Content Distribution Networks
- Cld: Client to DCE interface
- Cln: Client to NE or Edge NE interface
- Cm: Core to Meter interface
- Cn: Controller to NMS interface
- Cnms: Client to NMS interface
- Cs: Core to State DB interface
- CSO: Cross Stratum Optimization
- DB: Database
- DC: Data Center
- DCE: Data Center Element
- Dd: DC manager to DCE interface
- De: DC manager to Edge NE interface
- Do: Dispatcher to Output interface
- GMPLS: Generalized Multi-Protocol Label Switching
- lad: Admin sub-module to Core sub-module interface
- lalg: Algorithms & Policies sub-module to DB sub-module interface
- Idb: Core sub-module to DB sub-module interface
- IGP: Interior Gateway Protocol
- Ip: Core sub-module to Algorithms & Policies sub-module interface
- IP: Internet Protocol
- IT: Information Technology
- Mi: Meter to Input interfaces
- NE, xE: Network Element
- NMS: Network Management System
- Nn: NMS to NE interface
- OpEx: OPerational EXpenditure
- OXC: Optical Cross Connect
- ROADM: reconfigurable optical add-drop multiplexer
- SNMP: Simple Network Management Protocol
- VM: Virtual Machine

## Claims

1. A system to trigger cross-layer optimizations in a network, the system comprising following elements:
- an application Cross Stratum Optimization, CSO, gateway coupleable to an application layer, the application CSO gateway adapted to configure and monitor a plurality of Data Center Elements which store a plurality of computing resources; and
- a network CSO gateway, coupleable to a network layer, the network CSO gateway adapted to configure and monitor a plurality of Network Elements by using information stored in a Network Related Data module using a Network Processes module and to communicate with said application CSO gateway adapted to configure connections between a plurality of Data Centers, each one of said plurality of Data Centers including one of said Data Center Elements,
wherein the system is **characterized in that** it further comprises:
- a Client entity coupleable to a Network Element or to a Data Center Element, the Client entity configured to monitor a segment of the network where said Client entity is located by means of metering a plurality of parameters, and the Client entity adapted to produce monitored network information;
- an IT-Aware Network Controller coupleable to said network layer, the IT-Aware network Controller configured to interact with said application layer and to run operations in the network including execution of said triggering based on at least said monitored network information and on information regarding said plurality of Data Center Elements; and
- a plurality of interfaces coupling the different elements of the system allowing the interconnection and communication between them.

2. The system according to claim 1, **characterized in that** said IT-Aware Network Controller comprises:
- a Core module configured to at least store the configuration of said network by requesting it to said network CSO gateway and to store and run an algorithm complying with a plurality of policies;
- a dispatcher module coupled to said Core module, to an IT information collector and to a Client collector and configured to send a plurality of commands to said Client entity;
- a Meter module coupled to said Core module, to said IT information collector and to said Client Controller and configured to receive said monitored network information from said Client entity and the information regarding said plurality of Data Center Elements and to further send it to said Core module;
- said Client Controller configured to at least retrieve the monitored network information from said Client entity and further configured to adapt it to said Meter module;
- said IT information collector configured to retrieve the information regarding said plurality of Data Center Elements and further configured to adapt it to said Meter module; and
- an IT state database configured to store said plurality of computing resources of said Data Center Elements and the monitored network information from said Client entity.

3. The system according to claim 2, **characterized in that** it further comprises an IT-aware algorithm module coupled to said Core module and to said IT state database and configured to contain a plurality of algorithms complying with said policies.

4. The system according to claim 1, **characterized in that** said Client entity includes following modules:
- an Admin module configured to provide an interface with said IT-Aware Network Controller;
- a Core module configured to handle the interaction among said IT-Aware Network Controller and the rest of said Client entity modules;
- an algorithms and policies module configured to apply a plurality of algorithms complying with a plurality of policies;
- a database, module configured to store information of the network regarding said monitoring.

5. The system according to claim 1, **characterized in that** said IT-Aware Network Controller is a centralized element of said network.

6. The system according to claim 1, **characterized in that** said IT-Aware Network Controller is an element distributed in said network.

7. A method to trigger cross-layer optimizations in a network, the method comprising:
- configuring and monitoring, by an application Cross Stratum Optimization, CSO, gateway, a plurality of Data Center Elements storing a plurality of computing resources, said configuring and monitoring performed upon receiving a request, from a user, for said plurality of computing resources; and
- configuring and monitoring, by a network CSO gateway, a plurality of Network Elements and receiving requests from said application CSO gateway for configuring connections between a plurality of Data Centers,
wherein the method is **characterized in that** it further comprises following steps:
- monitoring, by a Client entity, a segment of a network where said Client entity is located by means of metering a plurality of parameters, the Client entity producing monitored network information;
- running, by an IT-Aware Network Controller, operations in the network including execution of said triggering at least based on said monitored network information and on information regarding said plurality of Data Center Elements, allowing a further interaction with an application layer where said application CSO gateway is arranged, said further interaction enabling at least a request for a new connection configuration between said plurality of Data Centers.

8. The method according to claim 7, **characterized in that** said Client entity further processes the monitored network information to derive optimization actions based on applied policies.

9. The method according to claim 7, **characterized in that** said monitored network information comprises information regarding the physical topology of said network.

10. The method according to claim 7, further comprising performing said monitoring of the network by said network CSO gateway.

11. The method according to claim 7, **characterized in that** said IT-Aware Network Controller further executes a plurality of triggering conditions by means of running an algorithm complying with a plurality of policies.

12. The method according to claim 11, comprising executing said triggering conditions for configuring said network, said configuring at least comprising increasing the bandwidth of a plurality of interfaces, defining a new data path connection configuration between said plurality of Data Centers, creating said new data path in the form of control plane commands for transport layer and routing commands for the IP layer and/or destroying said connection configuration between said plurality of Data Centers.

13. The method according to claim 11, comprising executing said triggering conditions for performing actions over said plurality of computing resources.

14. The method according to claim 13, **characterized in that** said performed actions at least comprises moving or replicating said plurality of computing resources from one of said Data Center Elements to another.

## Patentansprüche

1. System zum Auslösen von Cross-Layer-Optimierungen in einem Netzwerk, wobei das System folgende Elemente umfasst:
- ein Anwendungs-Gateway zur schichtübergreifenden Optimierung, CSO *(Cross Stratum Optimization),* das an eine Anwendungsschicht gekoppelt werden kann, wobei das Anwendungs-CSO-Gateway eingerichtet ist, um mehrere Rechenzentrumselemente auszubilden und zu überwachen, welche mehrere Rechenressourcen speichern; und
- ein Netzwerk-CSO-Gateway das an eine Netzwerkschicht gekoppelt werden kann, wobei das Netzwerk-CSO-Gateway eingerichtet ist, um mehrere Netzwerkelemente durch Verwenden von Informationen, die in einem netzwerkbezogenen Datenmodul gespeichert sind, unter Verwendung eines Netzwerkprozessmoduls auszubilden und zu überwachen und mit dem Anwendungs-CSO-Gateway zu kommunizieren, das eingerichtet ist, um Verbindungen zwischen mehreren Rechenzentren auszubilden, wobei jedes der mehreren Rechenzentren eines der Rechenzentrumselemente beinhaltet,
wobei das System **dadurch gekennzeichnet ist, dass** es ferner folgendes umfasst:
- eine Client-Einheit, die an ein Netzwerkelement oder an ein Rechenzentrumselement gekoppelt werden kann, wobei die Client-Einheit ausgebildet ist, um ein Segment des Netzwerks zu überwachen, wobei die Client-Einheit durch Messen mehrerer Parameter ermittelt wird, und die Client-Einheit eingerichtet ist, um überwachte Netzwerkinformationen zu produzieren;
- eine IT-fähige Netzwerksteuerung, die an die Netzwerkschicht gekoppelt werden kann, wobei die IT-fähige Netzwerksteuerung ausgebildet ist, um mit der Anwendungsschicht zu interagieren und Vorgänge in dem Netzwerk einschließlich des Ausführens des Auslösens basierend mindestens auf den überwachten Netzwerkfunktionen und auf Informationen bezüglich der mehreren Rechenzentrumselemente auszuführen; und
- mehrere Schnittstellen, die die verschiedenen Elemente des Systems koppeln, die die Verbindung und Kommunikation zwischen diesen ermöglichen.

2. System nach Anspruch 1, **dadurch gekennzeichnet, dass** die IT-fähige Netzwerksteuerung folgendes umfasst:
- ein Kernmodul, das ausgebildet ist, um mindestens die Ausbildung des Netzwerks durch Anfragen desselbigen an das Netzwerk-CSO-Gateway zu speichern und einen Algorithmus zu speichern und auszuführen, der mehreren Regeln entspricht;
- ein Versendermodul, das an das Kernmodul, an einen IT-Informationssammler und an einen Client-Sammler gekoppelt ist und ausgebildet ist, um mehrere Befehle zu der Client-Einheit zu senden;
- ein Messmodul, das an das Kernmodul, an den IT-Informationssammler und an die Client-Steuerung gekoppelt ist und ausgebildet ist, um die überwachten Netzwerkinformationen von der Client-Einheit und die Informationen bezüglich der mehreren Rechenzentrumselemente zu erhalten und sie ferner zu dem Kernmodul zu senden;
- wobei die Client-Steuerung ausgebildet ist, um mindestens die überwachten Netzwerkinformationen von der Client-Einheit abzurufen, und ferner ausgebildet ist, um sie an das Messmodul anzupassen;
- wobei der IT-Informationssammler ausgebildet ist, um die Informationen bezüglich der mehreren Rechenzentrumselemente abzurufen, und ferner ausgebildet ist, um sie an das Messmodul anzupassen; und
- eine IT-Zustands-Datenbank, die ausgebildet ist, um die mehreren Rechenressourcen der Rechenzentrumselemente und die überwachten Netzwerkinformationen von der Client-Einheit zu speichern.

3. System nach Anspruch 2, **dadurch gekennzeichnet, dass** es ferner ein IT-fähiges Algorithmusmodul umfasst, das an das Kernmodul und an die IT-Zustands-Datenbank gekoppelt ist und ausgebildet ist, um mehrere Algorithmen zu enthalten, die den Regeln entsprechen.

4. System nach Anspruch 1, **dadurch gekennzeichnet, dass** die Client-Einheit folgende Module beinhaltet:
- ein Admin-Modul, das ausgebildet ist, um eine Schnittstelle mit der ITfähigen Netzwerksteuerung bereitzustellen;
- ein Kernmodul, das ausgebildet ist, um die Interaktion zwischen der ITfähigen Netzwerksteuerung und dem Rest der Client-Einheit-Module abzuwickeln;
- ein Algorithmus- und Regelmodul, das ausgebildet ist, um mehrere Algorithmen anzuwenden, die mehreren Regeln entsprechen;
- ein Datenbankmodul, das ausgebildet ist, um Informationen des Netzwerks bezüglich der Überwachung zu speichern.

5. System nach Anspruch 1, **dadurch gekennzeichnet, dass** die IT-fähige Netzwerksteuerung ein zentralisiertes Element des Netzwerks ist.

6. System nach Anspruch 1, **dadurch gekennzeichnet, dass** die IT-fähige Netzwerksteuerung ein Element ist, das in dem Netzwerk verteilt ist.

7. Verfahren zum Auslösen von Cross-Layer-Optimierungen in einem Netzwerk, wobei das Verfahren folgendes umfasst:
- Ausbilden und Überwachen durch ein Anwendungs-Gateway zur schichtübergreifenden Optimierung, CSO, mehrerer Rechenzentrumselemente, die mehrere Rechenressourcen speichern, wobei das Ausbilden und Überwachen nach dem Erhalten einer Anfrage von einem Nutzer bezüglich den mehreren Rechenressourcen durchgeführt wird; und
- Ausbilden und Überwachen durch ein Netzwerk-CSO-Gateway mehrerer Netzwerkelemente und Erhalten von Anfragen von dem Anwendungs-CSO-Gateway zum Ausbilden von Verbindungen zwischen mehreren Rechenzentren,
wobei das Verfahren **dadurch gekennzeichnet ist, dass** es ferner folgende Schritte umfasst:
- Überwachen durch eine Client-Einheit eines Segments eines Netzwerks, wobei die Client-Einheit durch Messen mehrerer Parameter ermittelt wird, wobei die Client-Einheit überwachte Netzwerkinformationen produziert;
- Ausführen durch eine IT-fähige Netzwerksteuerung von Vorgängen in dem Netzwerk einschließlich des Ausführens des Auslösens basierend mindestens auf den überwachten Netzwerkinformationen und auf Informationen bezüglich der mehreren Rechenzentrumselemente, was eine weitere Interaktion mit einer Anwendungsschicht erlaubt, wo das Anwendungs-CSO-Gateway eingerichtet ist, wobei die weitere Interaktion mindestens eine Anfrage bezüglich einer neuen Verbindungsausbildung zwischen den mehreren Rechenzentren ermöglicht.

8. Verfahren nach Anspruch 7, **dadurch gekennzeichnet, dass** die Client-Einheit ferner die überwachten Netzwerkinformationen verarbeitet, um Optimierungsvorgänge basierend auf angewandten Regeln abzuleiten.

9. Verfahren nach Anspruch 7, **dadurch gekennzeichnet, dass** die überwachten Netzwerkinformationen Informationen bezüglich der physikalischen Topologie des Netzwerks umfassen.

10. Verfahren nach Anspruch 7, ferner umfassend das Durchführen der Überwachung des Netzwerks durch das Netzwerk-CSO-Gateway.

11. Verfahren nach Anspruch 7, **dadurch gekennzeichnet, dass** die IT-fähige Netzwerksteuerung ferner mehrere Auslösebedingungen durch Ausführen eines Algorithmus, der mehreren Regeln entspricht, erfüllt.

12. Verfahren nach Anspruch 11, umfassend das Erfüllen der Auslösebedingungen zum Ausbilden des Netzwerks, wobei das Ausbilden mindestens das Erhöhen der Bandbreite mehrerer Schnittstellen, das Definieren einer neuen Datenstreckenverbindungsausbildung zwischen den mehreren Rechenzentren, das Schaffen einer neuen Datenstrecke in Form von Steuerebenenbefehle für Transportschicht- und Leitbefehle für die IP-Schicht und/oder zum Zerstören der Verbindungsausbildung zwischen den mehreren Rechenzentren umfasst.

13. Verfahren nach Anspruch 11, umfassend das Erfüllen der Auslösebedingungen zum Durchführen von Vorgängen bezüglich der mehreren Rechenressourcen.

14. Verfahren nach Anspruch 13, **dadurch gekennzeichnet, dass** die durchgeführten Vorgänge mindestens das Verschieben oder Reproduzieren der mehreren Rechenressourcen von einem der Rechenzentrumselemente zu einem anderen umfasst.

## Revendications

1. Système pour déclencher des optimisations inter-couches dans un réseau, le système comprenant les éléments suivants :
- une passerelle d'application d'optimisation inter-strate, CSO (*Cross Stratum Optimization*), qui peut être couplée à une couche d'application, la passerelle d'application CSO étant adaptée pour configurer et surveiller une pluralité d'éléments du centre de données qui stockent une pluralité de ressources informatiques ; et
- une passerelle de réseau CSO, qui peut être couplée à une couche de réseau, la passerelle de réseau CSO étant adaptée pour configurer et surveiller une pluralité d'éléments de réseau en utilisant des informations stockées dans un module de données associées au réseau utilisant un module de processus de réseau et pour se communiquer avec ladite passerelle d'application CSO adaptée pour configurer des connexions entre une pluralité de centres de données, chacun de ladite pluralité de centres de données incluant l'un desdits éléments du centre de données,
dans lequel le système est **caractérisé en ce qu**'il comprend en outre :
- une entité cliente qui peut être couplée à un élément de réseau ou à un élément du centre de données, l'entité cliente étant configurée pour surveiller un segment du réseau où ladite entité cliente est située au moyen du comptage d'une pluralité de paramètres, et l'entité cliente étant adaptée pour produire des informations de réseau surveillées ;
- un contrôleur de réseau avec prise en charge TI qui peut être couplé à ladite couche de réseau, le contrôleur de réseau avec prise en charge TI étant configuré pour interagir avec ladite couche d'application et pour réaliser des opérations dans le réseau incluant l'exécution dudit déclenchement basé sur au moins lesdites informations de réseau surveillées et sur les informations concernant ladite pluralité d'éléments du centre de données ; et
- une pluralité d'interfaces couplant les différents éléments du système en permettant l'interconnexion et la communication entre eux.

2. Système selon la revendication 1, **caractérisé en ce que** ledit contrôleur de réseau avec prise en charge TI comprend :
- un module de base configuré pour au moins stocker la configuration dudit réseau en la demandant à ladite passerelle de réseau CSO et pour stocker et appliquer un algorithme qui se conforme à une pluralité de politiques ;
- un module répartiteur couplé audit module de base, à un collecteur d'informations TI et à un client collecteur et configuré pour envoyer une pluralité de commandes à ladite entité cliente ;
- un module compteur couplé audit module de base, audit collecteur d'informations TI et audit client contrôleur et configuré pour recevoir lesdites informations de réseau surveillées depuis ladite entité cliente et les informations concernant ladite pluralité d'éléments du centre de données et en outre pour les envoyer audit module de base ;
- ledit client contrôleur configuré pour au moins récupérer les informations de réseau surveillées depuis ladite entité cliente et configuré en outre pour les adapter audit module compteur ;
- ledit collecteur d'informations TI configuré pour récupérer les informations concernant ladite pluralité d'éléments du centre de données et configuré en outre pour les adapter audit module compteur ; et
- une base de données d'état TI configurée pour stocker ladite pluralité de ressources informatiques desdits éléments du centre de données et les informations de réseau surveillées depuis ladite entité cliente.

3. Système selon la revendication 2, **caractérisé en ce qu'**il comprend en outre un module d'algorithme avec prise en charge TI couplé audit module de base et à ladite base de données d'état TI et configuré pour contenir une pluralité d'algorithmes qui se conforment auxdites politiques.

4. Système selon la revendication 1, **caractérisé en ce que** ladite entité cliente inclut les modules suivants :
- un module administrateur configuré pour fournir une interface avec ledit contrôleur de réseau avec prise en charge TI ;
- un module de base configuré pour gérer l'interaction parmi ledit contrôleur de réseau avec prise en charge TI et le reste desdits modules de l'entité cliente ;
- un module d'algorithmes et de politiques configuré pour appliquer une pluralité d'algorithmes qui se conforment à une pluralité de politiques ;
- un module de base de données configuré pour stocker des informations du réseau concernant ladite surveillance.

5. Système selon la revendication 1, **caractérisé en ce que** ledit contrôleur de réseau avec prise en charge TI est un élément centralisé dudit réseau.

6. Système selon la revendication 1, **caractérisé en ce que** ledit contrôleur de réseau avec prise en charge TI est un élément distribué dans ledit réseau.

7. Méthode pour déclencher des optimisations inter-couches dans un réseau, la méthode comprenant :
- la configuration et la surveillance, par une passerelle d'application d'optimisation inter-strate, CSO, d'une pluralité d'éléments du centre de données stockant une pluralité de ressources informatiques, lesdites configuration et surveillance étant mises en oeuvre après la réception d'une requête, d'un utilisateur, pour ladite pluralité de ressources informatiques ; et
- la configuration et la surveillance, par une passerelle de réseau CSO, d'une pluralité d'éléments de réseau et la réception de requêtes depuis ladite passerelle d'application CSO pour la configuration de connexions entre une pluralité de centres de données,
dans laquelle la méthode est **caractérisée en ce qu**'elle comprend en outre les étapes suivantes :
- la surveillance, par une entité cliente, d'un segment d'un réseau où ladite entité cliente est située au moyen du comptage d'une pluralité de paramètres, l'entité cliente produisant des informations de réseau surveillées ;
- l'application, par un contrôleur de réseau avec prise en charge TI, d'opérations dans le réseau incluant l'exécution dudit déclenchement au moins basé sur lesdites informations de réseau surveillées et sur les informations concernant ladite pluralité d'éléments du centre de données, en permettant une interaction supplémentaire avec une couche d'application où ladite passerelle d'application CSO est disposée, ladite interaction supplémentaire permettant au moins une requête pour une nouvelle configuration de connexion entre ladite pluralité de centres de données.

8. Méthode selon la revendication 7, **caractérisée en ce que** ladite entité cliente traite en outre les informations de réseau surveillées pour déduire des actions d'optimisation basées sur des politiques appliquées.

9. Méthode selon la revendication 7, **caractérisée en ce que** lesdites informations de réseau surveillées comprennent des informations concernant la topologie physique dudit réseau.

10. Méthode selon la revendication 7, comprenant en outre la mise en oeuvre de ladite surveillance du réseau par ladite passerelle de réseau CSO.

11. Méthode selon la revendication 7, **caractérisée en ce que** ledit contrôleur de réseau avec prise en charge TI exécute en outre une pluralité de conditions de déclenchement au moyen de l'application d'un algorithme qui se conforme à une pluralité de politiques.

12. Méthode selon la revendication 11, comprenant l'exécution desdites conditions de déclenchement pour configurer ledit réseau, ladite configuration comprenant au moins l'augmentation de la largeur de bande d'une pluralité d'interfaces, définissant une nouvelle configuration de connexion du chemin d'accès aux données entre ladite pluralité de centres de données, en créant ledit nouveau chemin d'accès aux données sous la forme de commandes de plan de contrôle pour la couche de transport et de commandes d'acheminement pour la couche IP et/ou en détruisant ladite configuration de connexion entre ladite pluralité de centres de données.

13. Méthode selon la revendication 11, comprenant l'exécution desdites conditions de déclenchement pour la mise en oeuvre des actions sur ladite pluralité de ressources informatiques.

14. Méthode selon la revendication 13, **caractérisée en ce que** lesdites actions mises en oeuvre comprennent au moins le déplacement ou la réplication de ladite pluralité de ressources informatiques depuis l'un desdits éléments du centre de données vers un autre.
